# EUROPEAN PATENT APPLICATION

(11) **EP 3 954 576 A1**
(43) Date of publication of application: **16.02.2022**
(21) Application number: 21189210.4
(22) Date of filing: 02.08.2021
(51) Int. Cl.: B60N 2/28, B60N 2/90

(54) **MULTIFUNCTION CARSEAT**

(30) Priority: 04.08.2020 CN 202010772131
(71) Applicant: Maxi Miliaan B.V., 5704 RD Helmond (NL)
(72) Inventor: Tian, Weijiu, Zhongshan City Guangdong Province (CN); Huang, Haixing, Zhongshan City Guangdong Province (CN); Du, Yuan, Zhongshan City Guangdong Province (CN); Yang, Wencong, Zhongshan City Guangdong Province (CN)
(74) Representative: Veldman-Dijkers, Cornelia G. C.

(57) **Abstract**

A multifunctional automobile child safety seat including a seat and a base is provided. The base includes a base lower cover, a detachable connection mechanism, a rotating platform, a steering positioning mechanism, and a double-restriction rotation mechanism for double-restricting rotation of the seat relative to the base. The invention provides the multifunctional automobile child safety seat, in which the seat and the base lower cover are disassembled or assembled through the detachable connection mechanism, which is convenient for use. The seat is adapted to rotate relative to the base through the rotating platform, and is adapted to be positioned through the steering positioning mechanism when being rotated, so as to facilitate placement of a child and adjust an orientation of the child. The double-restriction rotation mechanism prevents excessive rotation of the seat to prevent customer's misuse, thereby improving safety, and facilitating rotation adjustment of the seat.

## Description

### BACKGROUND

### Technical Field

The invention relates to a field of children's products, and particularly relates to a multifunctional automobile child safety seat.

### Description of Related Art

The current automobile child safety seat has a single function and is inconvenient in use.

### SUMMARY

The invention solves the technical problems of single function and inconvenient use of an automobile child safety seat, and provides a multifunctional automobile child safety seat with a simple structure and a reasonable design.

The invention is realized through the following technical solutions:

The invention provides a multifunctional automobile child safety seat including a seat and a base, the base includes a base lower cover, a detachable connection mechanism disposed on the base lower cover for detachably connecting the seat and the base lower cover, a rotating platform disposed on the base for providing the seat to rotate relative to the base, a steering positioning mechanism disposed on the base and used to make the seat keeping a rotating position relative to the base, and a double-restriction rotation mechanism for double-restricting rotation of the seat relative to the base.

In the multifunctional automobile child safety seat as described above, the detachable connection mechanism includes a locking and fixing device arranged on the base and used to lock or unlock the seat to realize detachable connection, a seat locking device arranged on the base for keeping the lock and fixing device in a locking state, and a seat unlocking device for keeping the lock and fixing device in an unlocking state.

In the multifunctional automobile child safety seat as described above, the locking and fixing device includes a fixed hook, and a rotating hook that is arranged on the fixed hook and cooperates with the fixed hook for locking.

In the multifunctional automobile child safety seat as described above, the rotating platform is provided with a rotation locking mechanism for restricting rotation of the rotating platform, and a rotation unlocking mechanism for releasing the restriction of the rotation locking mechanism on the rotating platform.

In the multifunctional automobile child safety seat as described above, the rotation locking mechanism includes a locking pin penetrating through the rotating platform and inserted to the base, a rotation unlocking member hinged to the locking pin, and a rotation locking assembly that keeps pressing the locking pin toward the base.

In the multifunctional automobile child safety seat as described above, the steering positioning mechanism includes a plurality of grooves arranged on the base and surrounding a rotation center of the rotating platform and cooperating with the locking pin.

In the multifunctional automobile child safety seat as described above, the double-restriction rotation mechanism includes a rotation locking mechanism disposed on the rotating platform and used for restricting rotation of the rotating platform, a rotation unlocking mechanism used for releasing the restriction of the rotation locking mechanism on the rotating platform, and a misuse prevention mechanism for restricting a rotation range or releasing the restriction of the rotating platform, where when the misuse prevention mechanism and the rotation unlocking mechanism jointly release the restriction on the rotating platform, the rotating platform is adapted to rotate relative to the base.

In the multifunctional automobile child safety seat as described above, the misuse prevention mechanism includes a misuse prevention pin penetrating through the rotating platform and inserted to the base, a misuse prevention spring used to keep pressing the misuse prevention pin in a direction away from the base, and a misuse prevention button used to push the misuse prevention pin toward the base.

In the multifunctional automobile child safety seat as described above, the seat includes a seat body, a headrest and a seat plate disposed on the seat body, where a headrest adjusting mechanism used for adjusting a distance of the headrest relative to the seat body is provided between the headrest and the seat body, and a seat plate adjusting mechanism used for adjusting a distance of the seat plate relative to the seat body is provided between the seat plate and the seat body.

In the multifunctional automobile child safety seat as described above, the base is provided with a support leg mechanism that folds or unfolds relative to the base lower cover, where the support leg mechanism includes a support leg pad for pressing against the base lower cover in a folding state or pressing against a vehicle floor in an unfolding state.

Compared with the prior art, the invention has following advantages:

The invention provides the multifunctional automobile child safety seat, in which the seat and the base lower cover may be disassembled or assembled through a detachable connection mechanism, which is convenient for use. The seat may be rotated relative to the base through the rotating platform, and may be positioned through the steering positioning mechanism when being rotated, so as to facilitate placement of a child and adjust an orientation of the child. The double-restriction rotation mechanism may prevent excessive rotation of the seat to prevent customer's misuse, thereby improving safety, and facilitating rotation adjustment of the seat.

### BRIEF DESCRIPTION OF THE DRAWINGS

The accompanying drawings are included to provide a further understanding of the invention, and are incorporated in and constitute a part of this specification. Obviously, the drawings in the following description are only some embodiments of the invention. For those of ordinary skill in the art, other drawings may be obtained based on these drawings without creative work.

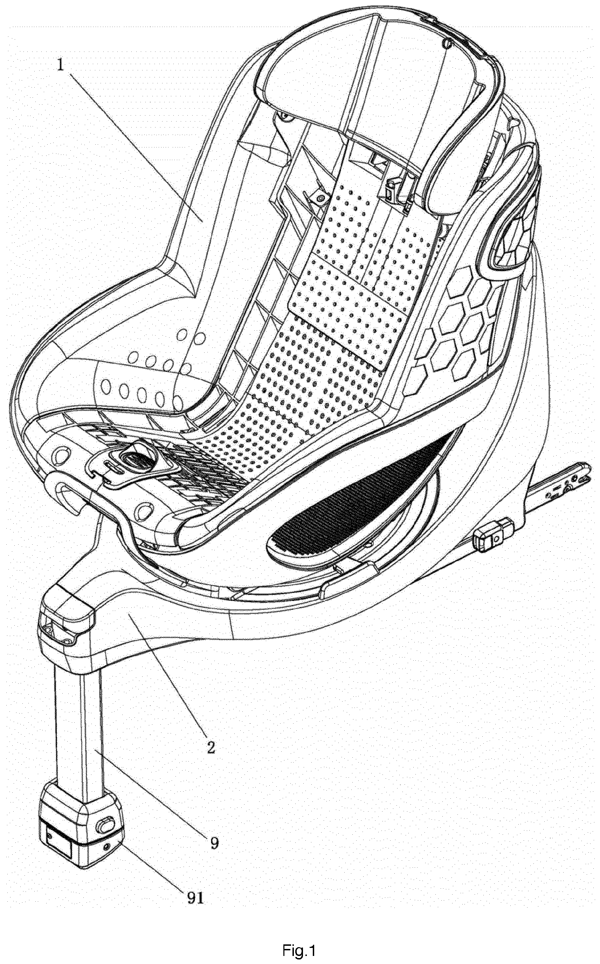

FIG. 1 is an overall structural schematic diagram of a multifunctional automobile child safety seat.
FIG. 2 is a partial structural schematic diagram 1 of a multifunctional automobile child safety seat.
FIG. 3 is an internal structural schematic diagram 1 of FIG. 2.
FIG. 4 is a structural exploded view of FIG. 3.

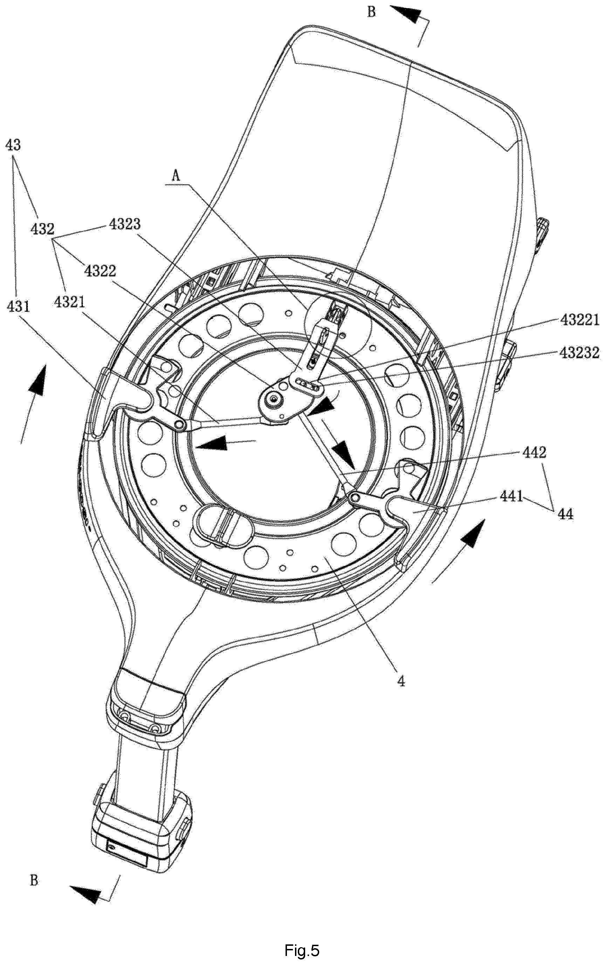

FIG. 5 is a partial structural schematic diagram 2 of a multifunctional automobile child safety seat.

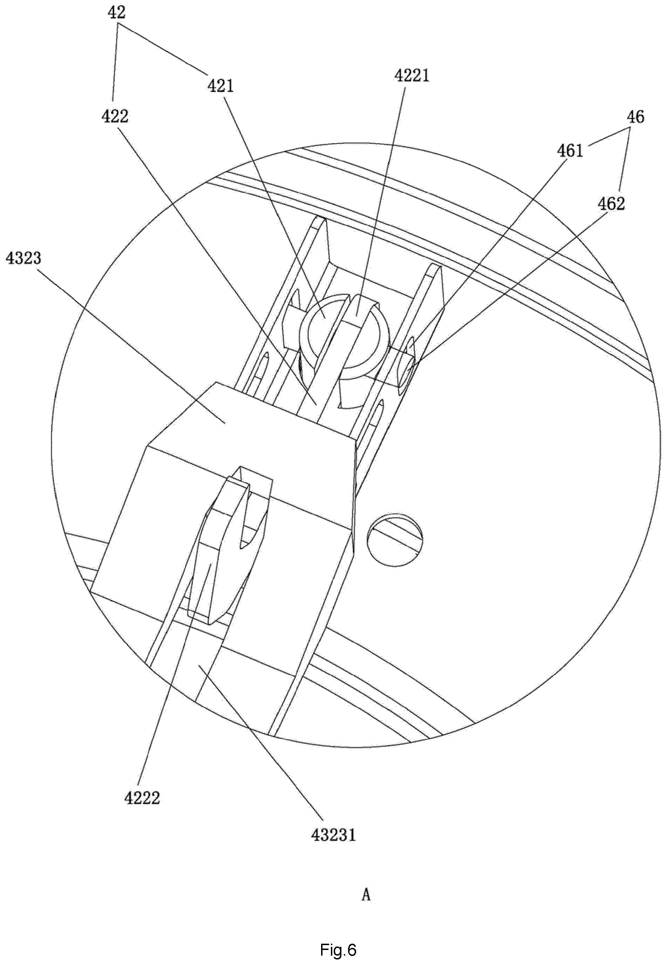

FIG. 6 is an enlarged view of an area A of FIG. 5.

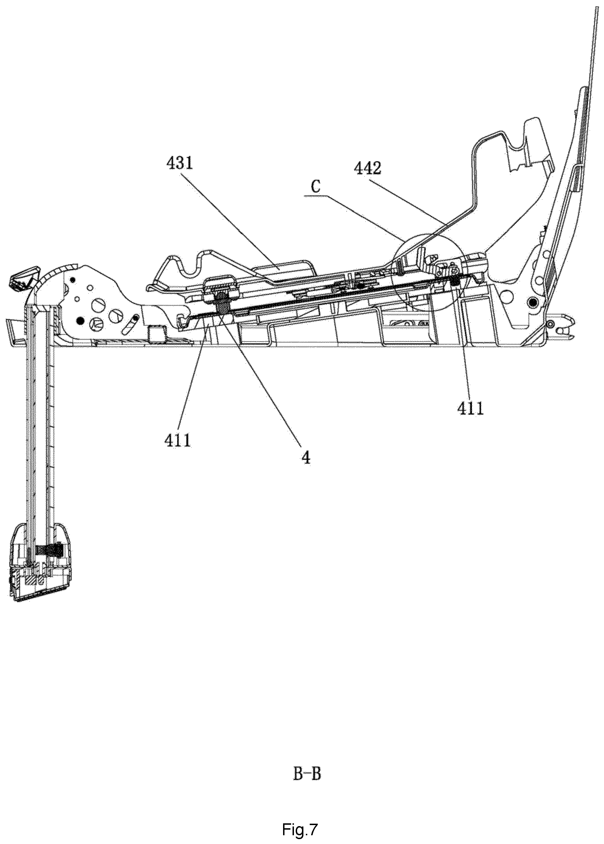

FIG. 7 is a cross-sectional view of FIG. 5 along a line B-B.

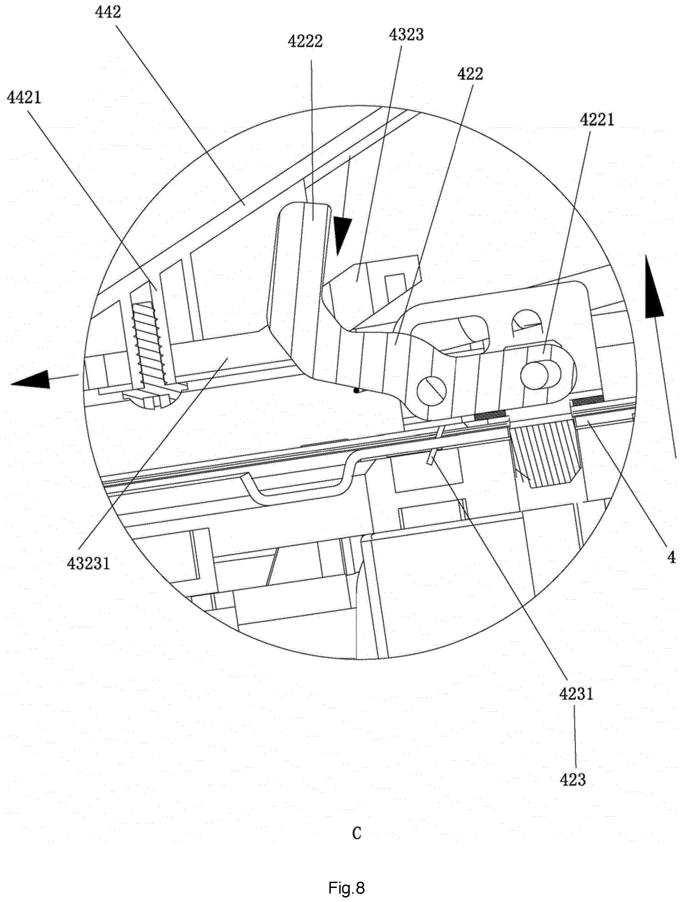

FIG. 8 is an enlarged view of an area C of FIG. 7.

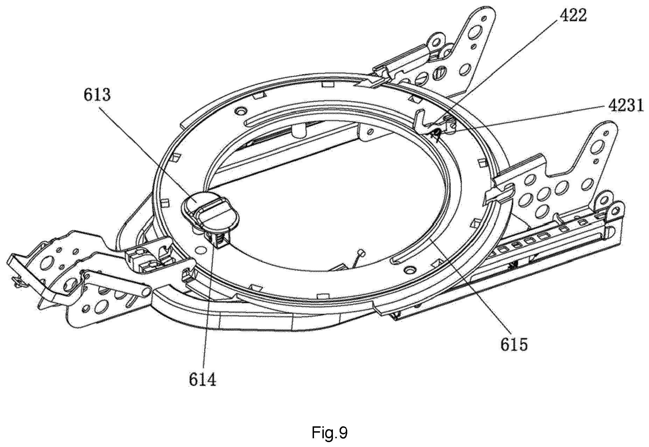

FIG. 9 is an internal structural schematic diagram 2 of FIG. 2.

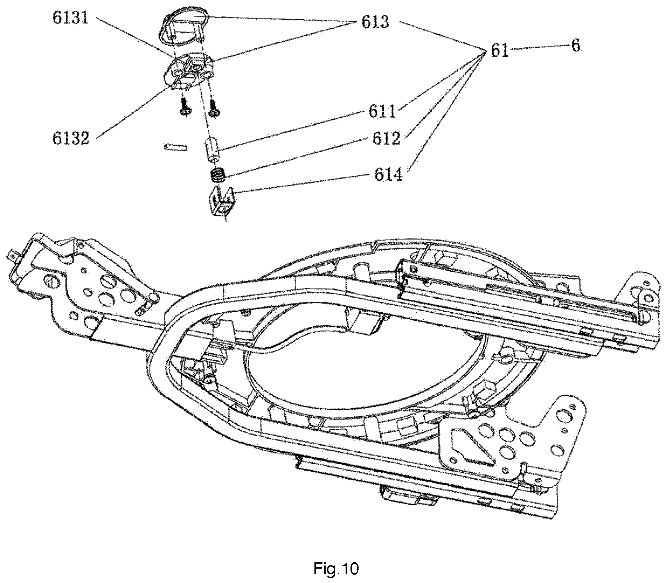

FIG. 10 is a structural exploded view of FIG. 9.
FIG. 11 is an internal structural schematic diagram 1 of a seat.
FIG. 12 is an internal structural schematic diagram 2 of the seat.

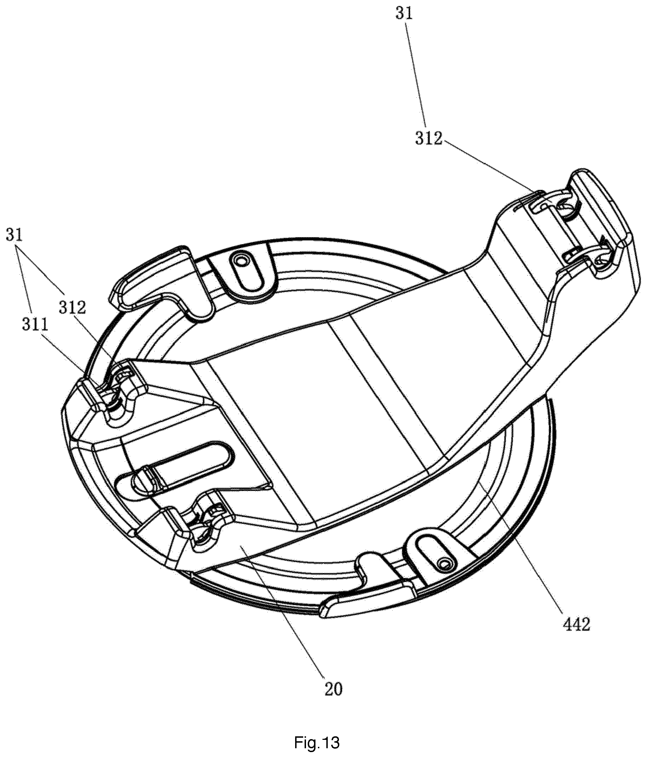

FIG. 13 is a partial structural schematic diagram of a base.

### DESCRIPTION OF THE EMBODIMENTS

In order to make the technical solutions of the technical problems solved by the invention and beneficial effects more clear, the invention is described in detail with reference to the accompanying drawings and embodiments. It should be understood that the specific embodiments described here are only used to explain the invention, and are not used to limit the invention.

When the embodiments of the invention refer to ordinal numbers such as "first", "second", etc., unless it actually expresses the meaning of an order according to the context, it should be understood as only for the purpose of distinguishing.

In the description of the invention, it should be noted that, unless otherwise clearly specified and limited, the terms "installation", "coupling" and "connection" should be interpreted broadly, for example, it may be a fixed connection or a detachable connection, or an integral connection; it may be a mechanical connection or an electrical connection; it may be a direct connection, or an indirect connection through an intermediate medium, and it may be internal communication between two components. For those of ordinary skill in the art, the specific meanings of the above terms in the invention may be interpreted according to specific situations.

A multifunctional automobile child safety seat includes a seat 1 and a base 2. The base 2 includes a base lower cover 20, a detachable connection mechanism 3 disposed on the base lower cover 20 for detachably connecting the seat 1 and the base lower cover 20, a rotating platform 4 disposed on the base 2 for providing the seat 1 to rotate relative to the base 2, a steering positioning mechanism 5 disposed on the base 2 and used to make the seat 1 keeping a rotating position relative to the base 2, and a double-restriction rotation mechanism 6 for double-restricting rotation of the seat 1 relative to the base 2.

The embodiment provides the multifunctional automobile child safety seat, in which the seat and the base lower cover may be disassembled or assembled through the detachable connection mechanism, which is convenient for use. The seat may be rotated relative to the base through the rotating platform, and may be positioned by the steering positioning mechanism when being rotated, so as to facilitate placement of a child and adjust an orientation of the child. The double-restriction rotation mechanism may prevent excessive rotation of the seat to prevent customer's misuse, thereby improving safety, and facilitating rotation adjustment of the seat.

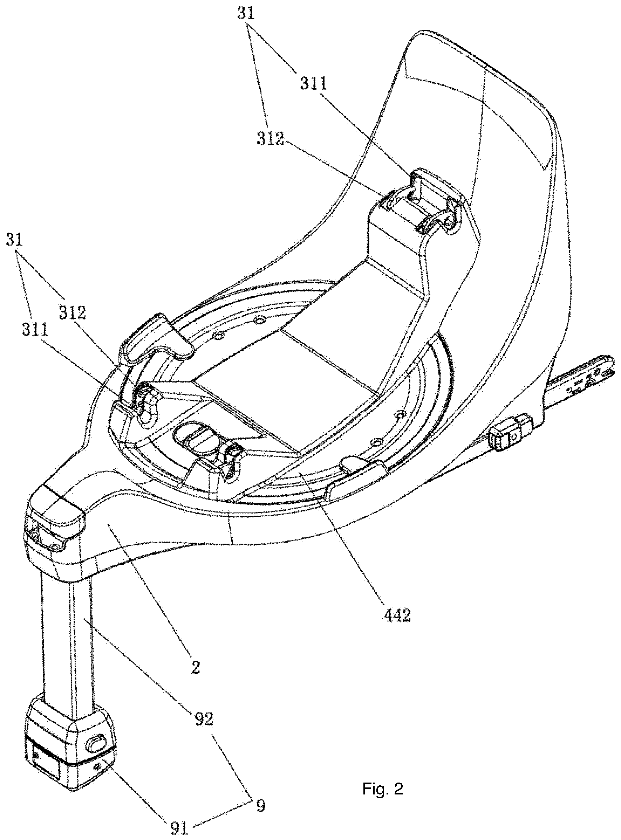

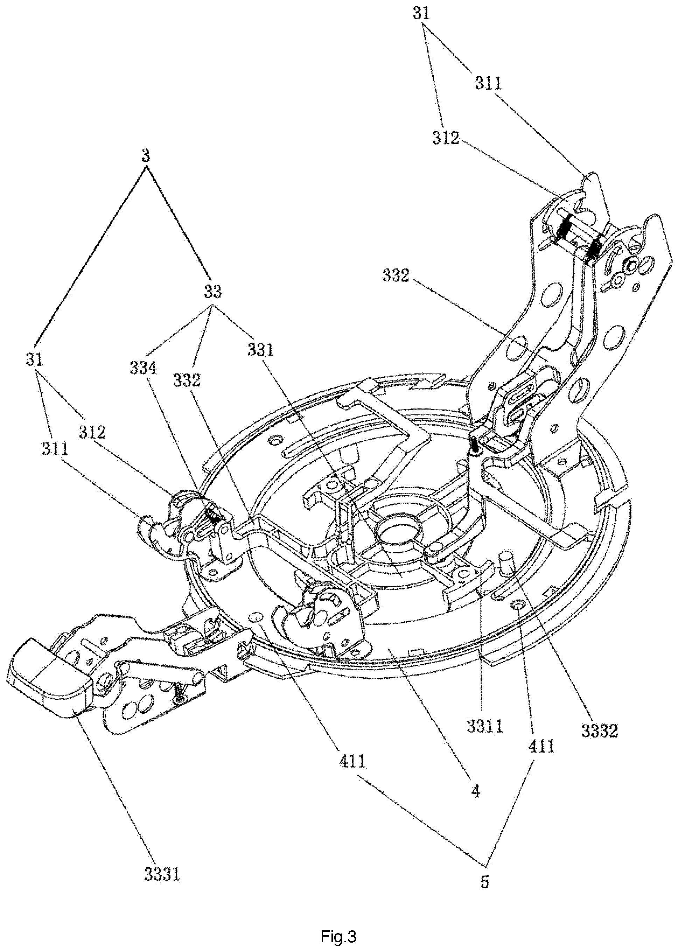

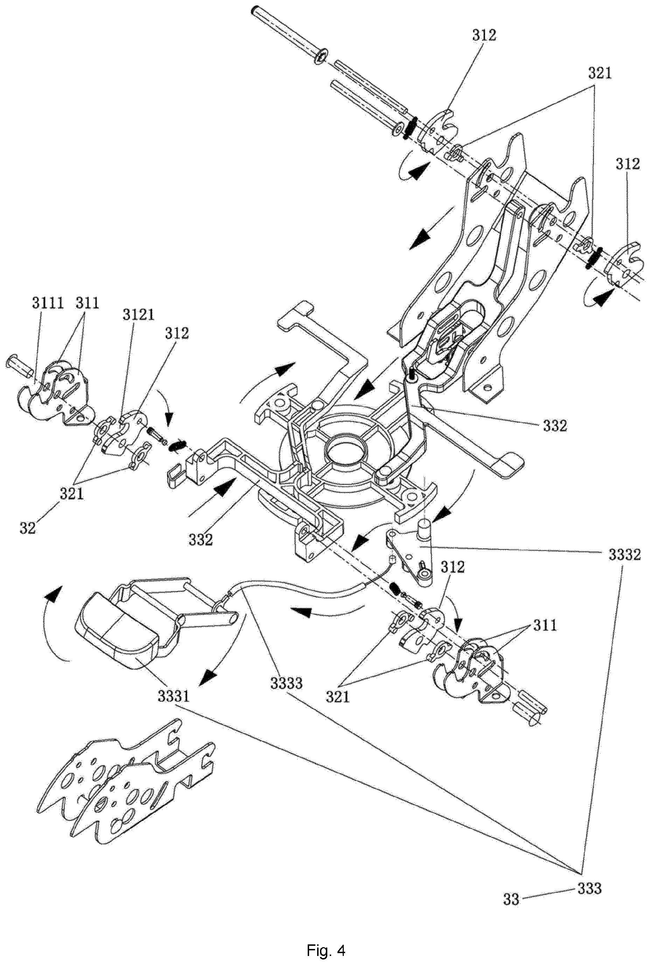

Further, as a preferred embodiment of the invention and not a limitation, as shown in FIG. 2 to FIG. 4, the detachable connection mechanism 3 includes a locking and fixing device 31 arranged on the base 2 and used to lock or unlock the seat 1 to realize detachable connection, a seat locking device 32 arranged on the base 2 for keeping the lock and fixing device 31 in a locking state, and a seat unlocking device 33 for keeping the lock and fixing device 31 in an unlocking state. The detachable connection mechanism and the base jointly form a base that is convenient for disassembling and assembling the automobile child safety seat. The locking and fixing device is used to connect the seat and the base, and the seat unlocking device is used to make the locking and fixing device to release the connection with the seat to realize a disassembling function.

Further, as a preferred embodiment of the invention and not a limitation, the locking and fixing device 31 includes a fixed hook 311, and a rotating hook 312 that is arranged on the fixed hook 311 and cooperates with the fixed hook 311 for clamping. The fixed hook is fixed relative to the base, and the rotating hook rotates relative to the fixed hook, so as to lock and fix the seat.

Further, as a preferred embodiment of the invention and not a limitation, the seat unlocking device 33 includes an unlocking dial 331 that is arranged on the base 2 and rotates relative to the base 2, an unlocking lever 332 that is hinged to the unlocking dial 331 and used to pull the rotating hook 312 to rotate, and an unlocking assembly 333 used to pull the unlocking dial 331 to rotate. The unlocking assembly pulls the unlocking dial to rotate, so that the unlocking lever hinged to the unlocking dial moves, and the unlocking lever moves to pull the rotating hook to rotate, thereby unlocking the connection of the seat, i.e., the rotating hook and the fixed hook no longer lock and fix the seat.

Further, as a preferred embodiment of the invention and not a limitation, the unlocking assembly 333 includes an unlocking handle 3331 hinged to the base 2, an engaging member 3332 hinged to the base 2, and a pulling member 3333 with two ends respectively connected to the unlocking handle 3331 and the engaging member 3332. When the unlocking handle 3331 is rotated, the pulling member 3333 pulls the engaging member 3332 to rotate to engage with the unlocking dial 331, so as to push the unlocking dial 331 to rotate. When one end of the unlocking handle is pulled up, the other end of the unlocking handle is pressed down to pull the pulling member. In the embodiment, the pulling member includes a steel rope. The pulling member pulls the engaging member to rotate, and the engaging member rotates to engage with the unlocking dial, so that the unlocking dial rotates to unlock the seat.

Further, as a preferred embodiment of the invention and not a limitation, two fixed hooks 311 are arranged side by side, the rotating hook 312 is arranged between the two fixed hooks 311, the fixed hook 311 is provided with a fixed groove 3111, and the rotating hook 312 is provided with a rotating groove 3121, and the rotating hook 312 is rotated to make the rotating groove 3121 to close an opening of the fixed groove 3111. The rotating hook arranged between the two fixed hooks facilitates locking and fixing of the seat, the seat is provided with a fixing crossbar, and the fixing crossbar is located in the rotating groove and the fixed groove when being locked.

Further, as a preferred embodiment of the invention and not a limitation, the seat locking device 32 includes a seat locking torsion spring 321 arranged between the fixed hook 311 and the rotating hook 312 and driving the rotating hook 312 to rotate in a direction of closing the opening of the fixed groove 3111. The seat locking torsion spring drives the rotating hook to rotate to make the rotating groove and the fixed groove forming a closed state.

Further, as a preferred embodiment of the invention and not a limitation, the seat unlocking device 33 further includes an unlocking tension spring 334 arranged between the unlocking lever 332 and the rotating hook 312. The unlocking lever moves, and the rotating hook is pulled by the unlocking tension spring.

Further, as a preferred embodiment of the invention and not a limitation, the rotating platform 4 arranged on the base 2 and rotating relative to the base 2 is further included, and the locking and fixing device 31 is arranged on the rotating platform 4. The locking and fixing device is arranged on the rotating platform and is adapted to rotate along with the rotating platform, so as to realize the rotation of the seat.

Further, as a preferred embodiment of the invention and not a limitation, the unlocking dial 331 is provided with a plurality of engaging parts 3311 cooperating with the engaging member 3332. When the unlocking dial is rotated along with the rotating platform, any one of the plurality of engaging parts may be engaged with the engaging member when being rotated to the position of the corresponding engaging member.

Further, as a preferred embodiment of the invention and not a limitation, the rotating platform 4 is provided with a rotation locking mechanism 42 for restricting rotation of the rotating platform 4 and a rotation unlocking mechanism 43 for releasing the restriction of the rotation locking mechanism 42 on the rotating platform 4. The base, the rotating platform, the rotation locking mechanism and the rotation unlocking mechanism commonly form a rotary automobile safety seat base. The rotation locking mechanism is used to restrict the rotation of the rotating platform, and the rotation unlocking mechanism is used to release the restriction of the rotation locking mechanism on the rotating platform, so that the rotating platform may be rotated.

Further, as a preferred embodiment of the invention and not a limitation, the rotation locking mechanism 42 includes a locking pin 421 penetrating through the rotating platform 4 and inserted to the base 2, a rotation unlocking member 422 hinged to the locking pin 421, and a rotation locking assembly 423 that keeps pressing the locking pin 421 toward the base 2. The rotation locking assembly makes the locking pin to keep penetrating through the rotating platform and the base at the same time, so as to limit the rotation of the rotating platform.

Further, as a preferred embodiment of the invention and not a limitation, the two end portions of the rotation unlocking member 422 are respectively a hinge end 4221 hinged to the locking pin 421 and a down-pressing end 4222, a middle portion of the rotation unlocking member 422 is hinged to the base 2, and the rotation locking assembly 423 includes a torsion spring 4231 arranged between the rotation unlocking member 422 and the base 2 and keeping pressing the hinge end 4221 toward the base 2. The torsion spring makes the hinge end of the rotation unlocking member to have the effect of keeping pressing toward the base, and keeping the state of locking the rotating platform.

Further, as a preferred embodiment of the invention and not a limitation, the rotation unlocking mechanism 43 includes an unlocking button 431 hinged to the rotating platform 4, and a rotation unlocking device 432 that makes the locking pin 421 to move toward a direction away from the base 2 when the unlocking button 431 is rotated.

Further, as a preferred embodiment of the invention and not a limitation, the rotation unlocking device 432 includes a rotation connecting rod 4321 hinged to the unlocking button 431, an eccentric rotating member 4322 respectively hinged to the rotation connecting rod 4321 and the rotating platform 4, and a linear moving member 4323 for linking the eccentric rotating member 4322 and the rotation unlocking member 422, where when the eccentric rotating member 4322 rotates, the linear moving member 4323 moves in a direction away from the down-pressing end 4222, so that the down-pressing end 4222 is pressed down toward the base 2 to disengage the locking pin 421 from the base 2. When the unlocking button is rotated toward the outside of the base, the rotation connecting rod is pulled by the rotation unlocking device, so that the eccentric rotating member rotates, and the rotated eccentric rotating member pulls the linear moving member to move, thereby pressing the down-pressing end toward the base, and the hinge end is upwarped to drive the locking pin to leave the base, so as to realize unlocking of the rotating platform. Further, as a preferred embodiment of the invention and not a limitation, the linear moving member 4323 is provided with a position-limiting groove 43231 for hooking with the down-pressing end 4222, the rotating platform 4 is provided with a rotating panel 442. The rotating panel 442 is provided with a position-limiting post 4421 for limiting the linear moving member 4323 to move along a length direction of the position-limiting groove 43231. The eccentric rotating member 4322 is provided with a sliding block 43221 and a sliding groove 43232 used for sliding in cooperation with the sliding block 43221, where the sliding block 43221 slides in cooperation with the sliding groove 43232 so that the linear moving member 4323 moves linearly under the function of the position-limiting post 4421, thereby making the down-pressing end 4222 to press down. The rotating panel cooperates with the linear moving member, so that the linear moving member may only move in a straight line, thereby pressing down the down-pressing end. The matching mode of the sliding groove and the sliding block may convert a rotation movement of the eccentric rotating member into a linear movement of the linear moving member. The linear moving member is restricted by the base and may only move in a straight line, so that when the unlocking dial rotates, the linear moving member may accordingly move linearly.

Further, as a preferred embodiment of the invention and not a limitation, the rotating platform 4 is provided with a vertical position-limiting mechanism 46 for limiting the locking pin 421 from moving in a direction perpendicular to the base 2. The vertical position-limiting mechanism 46 includes a vertical through slot 461 provided on the rotating platform 4 and perpendicular to the base 2, and a hinge member 462 penetrating through the vertical through slot 461 for hinging to the locking pin 421 and the rotation unlocking member 422. The locking pin is inserted in a direction perpendicular to the base, which may obtain a good locking effect and is not easy to fall out.

Further, as a preferred embodiment of the invention and not a limitation, the base 2 is provided with a plurality of grooves 411 arranged around a rotation center of the rotating platform 4 and cooperating with the locking pin 421. The plurality of grooves may provide a positioning function to the rotating platform when the rotating platform is rotated to a plurality of angles. The grooves do not penetrate through the rotating platform. When the rotating platform is subjected to an external force, the locking pin may easily fall out of the groove, so that it is unnecessary to use the unlocking button to perform unlocking, which is very convenient in use.

Further, as a preferred embodiment of the invention and not a limitation, the rotation unlocking mechanism 43 further includes a second rotation unlocking mechanism 44 disposed on the rotation platform 4 and opposite to the unlocking button 431, where the second rotation unlocking mechanism 44 includes a second unlocking button 441 hinged to the rotating platform 4, and a second rotation connecting rod 442 respectively hinged to the second unlocking button 441 and the eccentric rotating member 4322. The second rotation unlocking mechanism and the rotation unlocking mechanism are respectively located on two sides of the base, and the rotating platform may be unlocked from both sides, which is very convenient.

Further, as a preferred embodiment of the invention and not a limitation, the steering positioning mechanism 5 includes a plurality of grooves 411 arranged on the base 2 and surrounding the rotation center of the rotating platform 4 and cooperating with the locking pin 421. In the embodiment, the groove and the locking pin are arranged at an interval of 90°. The plurality of grooves may provide a positioning function to the rotating platform when the rotating platform is rotated to a plurality of angles. The grooves do not penetrate through the rotating platform. When the rotating platform is subjected to an external force, the locking pin may easily fall out of the groove, so that it is unnecessary to use the unlocking button to perform unlocking, which is very convenient in use.

Further, as a preferred embodiment of the invention and not a limitation, the double-restriction rotation mechanism 6 includes the rotation locking mechanism 42 disposed on the rotating platform 4 and used for restricting rotation of the rotating platform 4, the rotation unlocking mechanism 43 used for releasing the restriction of the rotation locking mechanism 42 on the rotating platform 4, and a misuse prevention mechanism 61 for restricting a rotation range or releasing the restriction of the rotating platform 4, where when the misuse prevention mechanism 61 and the rotation unlocking mechanism 43 jointly release the restriction on the rotating platform 4, the rotating platform 4 is adapted to rotate relative to the base 2. The double-restriction rotation mechanism and the base commonly form an automobile safety seat base with a misuse prevention function. The misuse prevention mechanism further restricts the rotating platform on the basis of restriction of the rotating locking mechanism on the rotating platform. In the embodiment, the rotation locking mechanism restricts the seat from rotating to 0°, 90°, 180°, and 270° relative to the base, so that the seat cannot be rotated at the above angles, and may be rotated after the restriction is released by the rotation unlocking mechanism, at this moment, rotation of the rotating platform is still restricted by the misuse prevention mechanism, and the rotating platform rotates within a restriction range of the misuse prevention mechanism. The above restriction range includes fixed-point restriction, such as 0°, 90°, etc., or interval restriction, such as 0° to 180°.

Further, as a preferred embodiment of the invention and not a limitation, the misuse prevention mechanism 61 includes a misuse prevention pin 611 penetrating through the rotating platform 4 and inserted to the base 2, a misuse prevention spring 612 used to keep pressing the misuse prevention pin 611 in a direction away from the base 2, and a misuse prevention button 613 used to push the misuse prevention pin 611 toward the base 2. The misuse prevention spring keeps pressing the misuse prevention pin in the direction away from the base, and the misuse prevention button is used to press the misuse prevention pin towards the base, where the direction toward the base is a direction toward the base lower cover.

Further, as a preferred embodiment of the invention and not a limitation, the misuse prevention mechanism 61 further includes a fixed base 614 provided on the rotating platform 4 and providing the misuse prevention pin 611 to move in a direction perpendicular to the base 2. The misuse prevention button 613 cooperates with the fixed base 614 to slide to the left and right. When the misuse prevention button 613 slides to the left and right, the misuse prevention pin 611 is respectively separated from the base 2 or inserted into the base 2. When the misuse prevention button is moved to the left, it presses the misuse prevention pin toward the base, and when the misuse prevention button is moved to the right, the misuse prevention pin is separated from the base under the function of the misuse prevention spring.

Further, as a preferred embodiment of the invention and not a limitation, the misuse prevention button 613 is provided with an inclined platform 6131 that gradually inclines from left to right toward the direction of the base 2, and the inclined platform 6131 is provided with a position-limiting groove 6132 for cooperating with the misuse prevention pin 611. The position-limiting groove is used to make the misuse prevention button keeping a state of pressing against the misuse prevention pin.

Further, as a preferred embodiment of the invention and not a limitation, the base 2 is provided with a long groove 615 for cooperating with the misuse prevention pin 611 and arranged around the rotation center of the rotating platform 4. The misuse prevention pin cooperates with the long groove to limit a rotation angle of the rotating platform. In the embodiment, the long groove is in a shape of a semicircular ring.

Further, as a preferred embodiment of the invention and not a limitation, the seat 1 includes a seat body 11, and a headrest 12 and a seat plate 13 provided on the seat body 11, where a headrest adjusting mechanism 7 used for adjusting a distance between the headrest 12 and the seat body 11 is provided between the headset 12 and the seat body 11, and a seat plate adjusting mechanism 8 for adjusting a distance between the seat plate 13 and the seat body 11 is provided between the seat plate 13 and the seat body 11.

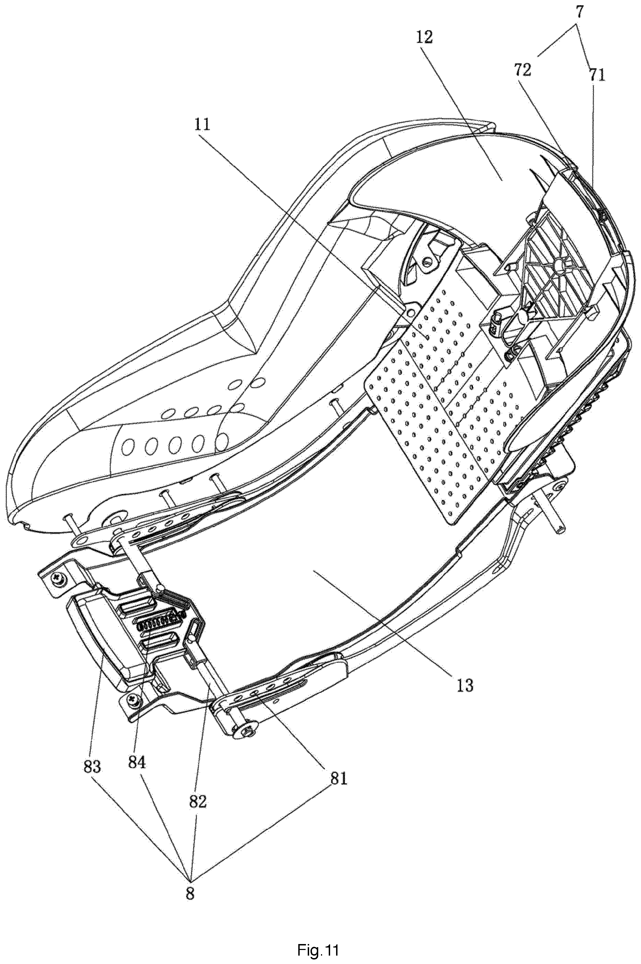

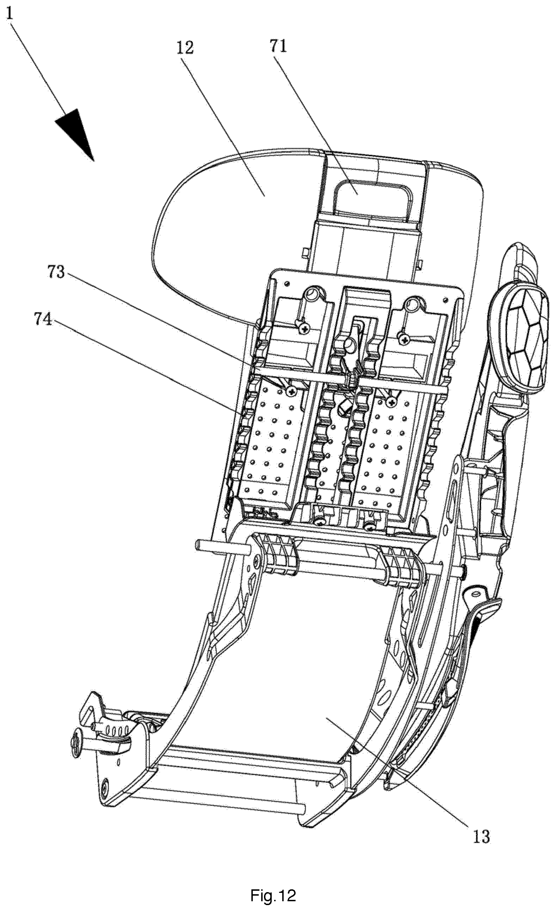

Further, as a preferred embodiment of the invention and not a limitation, as shown in FIG. 11 and FIG. 12, the headrest adjusting mechanism 7 includes a headrest adjusting button 71 hinged to the headrest at a center portion, a headrest spring 72 is provided between the seat body and one end portion of the headrest adjusting button, and the other end portion of the headrest adjusting button is provided with a headrest adjusting crossbar 73. The seat body is provided with a plurality of headrest locking positions 74 cooperating with the headrest adjustment crossbar. When the headrest is adjusted, an upper end of the headrest adjusting button is pressed, a lower end of the headrest adjusting button drives the headrest adjusting crossbar to upwarp, and the headrest slides to a required height position relative to the seat body, and the headrest spring presses against the upper end of the headrest adjusting button to make the headrest adjusting crossbar engaging with the headrest locking position, so as to realize headrest adjustment.

Further, as a preferred embodiment of the invention and not a limitation, the seat plate adjusting mechanism 8 includes a plurality of seat plate adjusting holes 81 provided on the seat body, a seat plate adjusting crossbar 82 that is inserted into the seat plate adjusting hole, a seat plate adjusting button 83 used for dragging the seat plate adjusting crossbar out of the seat plate adjusting hole, and a seat plate spring 84 respectively pressing against the seat plate adjusting button and the seat body. When the seat plate adjusting button is pulled out, the seat plate adjusting crossbar falls out of the seat plate adjusting hole. When the seat plate adjusting button is released, under the function of the seat plate spring, the seat plate adjusting button is reset to push the seat plate adjusting crossbar for inserting into the seat plate adjusting hole to realize the function of seat plate adjustment.

Further, as a preferred embodiment of the invention and not a limitation, the base 2 is provided with a support leg mechanism 9 that folds or unfolds relative to the base lower cover 20, where the support leg mechanism 9 includes a support leg pad 91 for pressing against the base lower cover 20 in a folding state or pressing against a vehicle floor in an unfolding state. The support leg pad pops out from a support leg 92. When the support leg pad is not pressed against the vehicle floor, an alarming apparatus is triggered to send an alarm. Similarly, in the folding state, when the support leg pad cannot press against the base, the support leg pad pops out to trigger the alarming apparatus to sound an alarm.

An operation principle of the embodiment is as follows:
The invention provides the multifunctional automobile child safety seat, in which the seat and the base lower cover may be disassembled or assembled through a detachable connection mechanism, which is convenient for use. The seat may be rotated relative to the base through the rotating platform, and may be positioned through the steering positioning mechanism when being rotated, so as to facilitate placement of a child and adjust an orientation of the child. The double-restriction rotation mechanism may prevent excessive rotation of the seat to prevent customer's misuse, thereby improving safety, and facilitating rotation adjustment of the seat.

It will be apparent to those skilled in the art that various modifications and variations can be made to the disclosed embodiments without departing from the scope or spirit of the invention. In view of the foregoing, it is intended that the invention covers modifications and variations provided they fall within the scope of the following claims and their equivalents.

## Claims

1. A multifunctional automobile child safety seat, comprising a seat (1) and a base (2), wherein the base (2) comprises a base lower cover (20), a detachable connection mechanism (3) disposed on the base lower cover (20) for detachably connecting the seat (1) and the base lower cover (20), a rotating platform (4) disposed on the base (2) for providing the seat (1) to rotate relative to the base (2), a steering positioning mechanism (5) disposed on the base (2) and used to make the seat (1) keeping a rotating position relative to the base (2), and a double-restriction rotation mechanism (6) for double-restricting rotation of the seat (1) relative to the base (2).

2. The multifunctional automobile child safety seat as claimed in claim 1, wherein the detachable connection mechanism (3) comprises a locking and fixing device (31) arranged on the base (2) and used to lock or unlock the seat to realize detachable connection, a seat locking device (32) arranged on the base (2) for keeping the lock and fixing device (31) in a locking state, and a seat unlocking device (33) for keeping the lock and fixing device (31) in an unlocking state.

3. The multifunctional automobile child safety seat as claimed in claim 2, wherein the locking and fixing device (31) comprises a fixed hook (311), and a rotating hook (312) that is arranged on the fixed hook (311) and cooperates with the fixed hook (311) for locking.

4. The multifunctional automobile child safety seat as claimed in claim 2, wherein the rotating platform (4) is provided with a rotation locking mechanism (42) for restricting rotation of the rotating platform (4), and a rotation unlocking mechanism (43) for releasing the restriction of the rotation locking mechanism (42) on the rotating platform (4).

5. The multifunctional automobile child safety seat as claimed in claim 4, wherein the rotation locking mechanism (42) comprises a locking pin (421) penetrating through the rotating platform (4) and inserted to the base (2), a rotation unlocking member (422) hinged to the locking pin (421), and a rotation locking assembly (423) that keeps pressing the locking pin (421) toward the base (2).

6. The multifunctional automobile child safety seat as claimed in claim 5, wherein the steering positioning mechanism (5) comprises a plurality of grooves (411) arranged on the base (2) and surrounding a rotation center of the rotating platform (4) and cooperating with the locking pin (421).

7. The multifunctional automobile child safety seat as claimed in claim 1, wherein the double-restriction rotation mechanism (6) comprises a rotation locking mechanism (42) disposed on the rotating platform (4) and used for restricting rotation of the rotating platform (4), a rotation unlocking mechanism (43) used for releasing the restriction of the rotation locking mechanism (42) on the rotating platform (4), and a misuse prevention mechanism (61) for restricting a rotation range or releasing the restriction of the rotating platform (4), wherein when the misuse prevention mechanism (61) and the rotation unlocking mechanism (43) jointly release the restriction on the rotating platform (4), the rotating platform (4) is adapted to rotate relative to the base (2).

8. The multifunctional automobile child safety seat as claimed in claim 7, wherein the misuse prevention mechanism (61) comprises a misuse prevention pin (611) penetrating through the rotating platform (4) and inserted to the base (2), a misuse prevention spring (612) used to keep pressing the misuse prevention pin (611) in a direction away from the base (2), and a misuse prevention button (613) used to push the misuse prevention pin (611) toward the base (2).

9. The multifunctional automobile child safety seat as claimed in claim 1, wherein the seat (1) comprises a seat body (11), a headrest (12) and a seat plate (13) disposed on the seat body (11), wherein a headrest adjusting mechanism (7) used for adjusting a distance of the headrest (12) relative to the seat body (11) is provided between the headrest (12) and the seat body (11), and a seat plate adjusting mechanism (8) used for adjusting a distance of the seat plate (13) relative to the seat body (11) is provided between the seat plate (13) and the seat body (11).

10. The multifunctional automobile child safety seat as claimed in claim 1, wherein the base (2) is provided with a support leg mechanism (9) that folds or unfolds relative to the base lower cover (20), wherein the support leg mechanism (9) comprises a support leg pad (91) for pressing against the base lower cover (20) in a folding state or pressing against a vehicle floor in an unfolding state.
